# EUROPEAN PATENT APPLICATION

(11) **EP 3 871 851 A1**
(43) Date of publication of application: **01.09.2021**
(21) Application number: 19903095.8
(22) Date of filing: 20.11.2019
(51) Int. Cl.: B29B 7/20, B29B 7/28, B29C 48/92

(54) **KNEADING DEVICE**

(30) Priority: 28.12.2018 JP 2018246485
(71) Applicant: KABUSHIKI KAISHA KOBE SEIKO SHO (KOBE STEEL, LTD.), Hyogo 651-8585 (JP)
(72) Inventor: YAMANE, Yasuaki, Hyogo 676-8670 (JP); HAMADA, Hikaru, Hyogo 676-8670 (JP)
(74) Representative: TBK
(86) International application number: PCT/JP2019/045441
(87) International publication number: WO 2020/137270

(57) **Abstract**

Provided is a kneading device that can check a progress of wear of an inner wall face of a kneading chamber provided in a casing without stopping the kneading device. A kneading device (1) includes a sensor-mount space (16) provided in a wall (3b) of a casing (3), a wear detecting sensor (14) of which a detecting section (17a) is disposed at a bottom of the sensor-mount space (16), and a controller (15) that receives a signal output from the wear detecting sensor (14), the controller (15) including a wear determining unit (22) that determines that wear of an inner wall face (3a) of a kneading chamber (2) has progressed based on a change in the signal.

## Description

### Technical Field

The present invention relates to a kneading device for kneading a high-polymer material, such as plastic and rubber, the kneading device having a function of detecting wear of an inner wall face of a kneading chamber.

### Background Art

High-polymer materials, such as plastic and rubber, are viscoelastic materials. When the kneading device is operating, a high friction is created between a high-polymer material (knead-material), such as plastic and rubber and an inner wall face of a kneading chamber provided in a casing of the kneading device. A known example of the kneading device is an apparatus used for kneading a rubber which becomes a raw material of a tire. In recent years, a rubber including a high percentage of a high hardness material such as silica has more been used as a raw material of a tire, so that the wear of the inner wall face of the kneading chamber has become severer than before.

As a conventional art, for example, an internal-check apparatus that checks the inner wall face of the kneading chamber is disclosed in Patent Literature 1. The internal-check apparatus is configured as below. The internal-check apparatus includes an image capturing unit that can capture an image inside a kneading device, an illumination unit that can illuminate the inside of the kneading device, a suspending member that suspends the image capturing unit inside the kneading device and moves the image capturing unit in a vertical direction, and a manipulating unit through which the image capturing unit is manipulated from outside the kneading device.

Using the internal-check apparatus, the internal state of the kneading device can be observed by a small number of people. Thus, the inside of the kneading device can be checked easily.

### Citation List

### Patent Literature

Patent Literature 1: JP 2016-37028 A

The appearance of the inner wall face of the kneading chamber however cannot be checked by the internal-check apparatus described in Patent Literature 1 while the kneading device is operating. Thus, the kneading device has to be stopped when checked. Moreover, it is difficult to quantitatively check the progress of wear of the inner wall face of the kneading chamber.

### Summary of Invention

An object of the present invention is to provide a kneading device that can check a progress of wear of an inner wall face of a kneading chamber without stopping the kneading device.

A kneading device according to an embodiment of the present invention includes at least one kneading rotor that is rotated about a predetermined axis to knead a knead-material and includes a kneading blade that applies a shear force to the knead-material, the kneading blade including a kneading blade tip provided at an outermost regarding a radial direction of the kneading rotor, a casing including an inner wall face opposing the kneading blade tip with a predetermined gap between the inner wall face and the kneading blade tip and forming a kneading chamber housing the at least one kneading rotor to knead the knead-material, the casing being formed of a sensor-mount space separated from the inner wall face, the sensor-mount space including a bottom apart from the inner wall face by a predetermined distance in the radial direction, a wear detecting sensor including a detecting section and housed in the sensor-mount space so that the detecting section is disposed at the bottom of the sensor-mount space, the wear detecting sensor being configured to output a signal according to a state of wear of the inner wall face in the radial direction, and a controller that receives the signal output from the wear detecting sensor and includes a wear determining unit that determines the progress of the wear of the inner wall face based on a change in the signal.

### Brief Description of Drawings

FIG. 1 is a front cross-sectional view illustrating a kneading device according to one embodiment of the present invention;
FIG. 2A is an enlarged cross-sectional view illustrating an enlarged figure of a casing section of the kneading device in FIG. 1;
FIG. 2B is an enlarged cross-sectional view illustrating a further enlarged figure of a portion in FIG. 2A;
FIG. 3A is an enlarged cross-sectional view of a casing section of a kneading device according to a first modified embodiment; and
FIG. 3B is an enlarged cross-sectional view of a casing section of a kneading device according to a second modified embodiment.

### Description of Embodiments

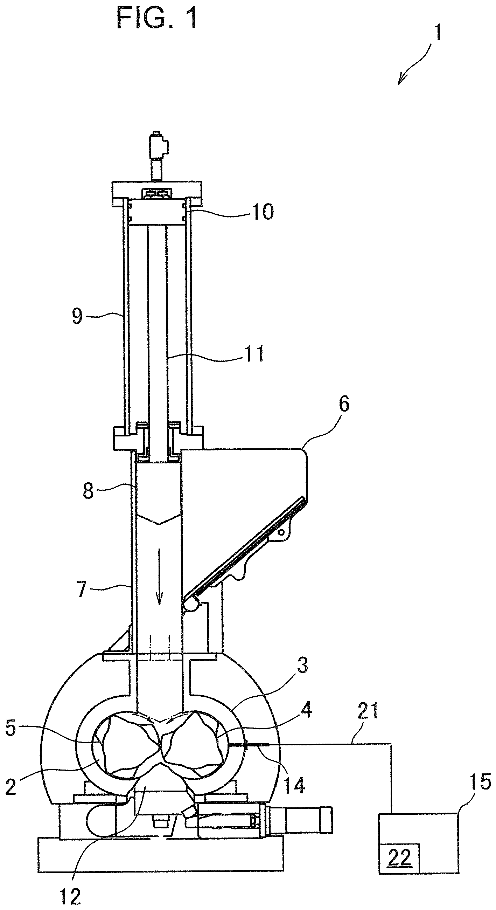

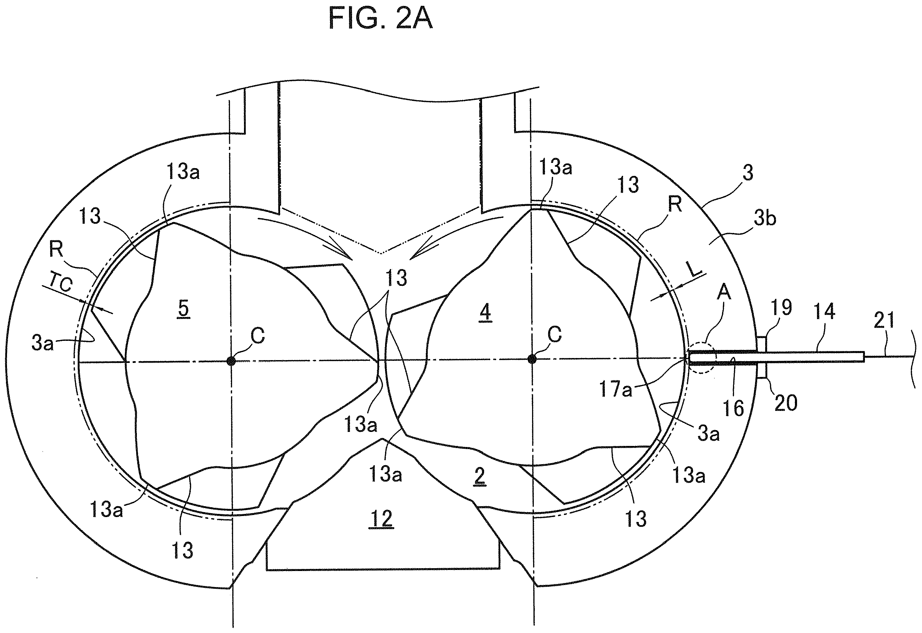

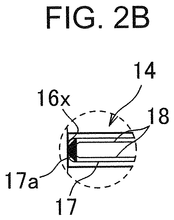

A kneading device 1, which is of a sealed type, according to one embodiment of the present invention will be described with reference to FIGS. 1, 2A, and 2B. FIG. 1 is a front cross-sectional view illustrating the kneading device 1 according to the embodiment. FIG. 2A is an enlarged cross-sectional view illustrating an enlarged figure of a casing section of the kneading device 1 in FIG. 1. FIG. 2B is an enlarged cross-sectional view illustrating a further enlarged figure of a portion (portion A) in FIG. 2A.

A general configuration of the kneading device 1 will be described. As illustrated in FIG. 1, the kneading device 1 includes a casing 3 having inside a kneading chamber 2, a pair of kneading rotors 4 and 5 (at least one kneading rotor) disposed in the kneading chamber 2, a material feeding sleeve 7 provided upright above the casing 3, a hopper 6 being attached to the material feeding sleeve 7, a floating weight 8 disposed in the material feeding sleeve 7 and allowed to move in a vertical direction, a pneumatic cylinder 9 having a sleeve shape, a piston 10, a piston rod 11, and a drop door 12.

The pneumatic cylinder 9 is coupled to an upper portion of the material feeding sleeve 7.

The piston 10 disposed in the pneumatic cylinder 9 is coupled to the floating weight 8 via the piston rod 11 that gas-tightly penetrates a bottom lid of the cylinder 9. By pressurizing an upper space in the pneumatic cylinder 9, the floating weight 8 is lowered and thereby a knead-material fed from the hopper 6 is pushed into the inside of the casing 3 through the material feeding sleeve 7. A major component of the knead-material is a high-polymer material such as plastic and rubber. Instead of the pneumatic cylinder 9, a hydraulic cylinder or an electric linear actuator may be used.

While kneading is performed, the drop door 12 which is openable/closable by a rotary actuator closes a discharge port provided in a bottom of the casing 3. The knead-substance that has been kneaded for a predetermined time in the kneading chamber 2 (thoroughly kneaded material) is discharged from the apparatus by opening the drop door 12.

The kneading rotors 4 and 5 are disposed adjacent to each other in a horizontal direction and rotate in different directions such that inside portions of the kneading rotors 4 and 5 opposing each other move downward (see FIG. 1). As illustrated in FIG. 2, each of the kneading rotors 4 and 5 has a plurality of kneading blades 13. Each kneading blade 13 has a kneading blade tip 13a located at the furthermost (to the outer side) from an axis C of the kneading rotor 4 or 5. The pair of kneading rotors 4 and 5 each rotates about each axis C in such a direction that the kneading blade tip 13a of the kneading rotor 4 and the kneading blade tip 13a of the kneading rotor 5 move inwardly from the upper side to the lower side in a region between the kneading rotors 4 and 5. The plurality of kneading blades 13 are rotated about the axis C to apply a shear force to the knead-material in a gap (tip clearance TC) between the kneading blade tip 13a and an inner wall face 3a of the kneading chamber 2 provided in the casing 3. That is, the inner wall face 3a of the kneading chamber 2 opposes the kneading blade tip 13a with a predetermined gap between the inner wall face 3a and the kneading blade tip 13a. The inner wall face 3a forms the kneading chamber 2 that houses the kneading rotors 4 and 5 to knead the knead-material. The kneading blade 13 has a spiral shape twisted about the axis C. This twist pushes the knead-material in an axial direction of the rotor and creates an axial flow of the knead-material. The tip clearance TC is a radial gap between the kneading blade tip (tip section) 13a, which is a leading end of the kneading blade 13, and the inner wall face 3a of the kneading chamber 2. The kneading blade tip 13a has a predetermined width along a rotating direction of the kneading blade 13.

The inner wall face 3a of the kneading chamber 2 provided in the casing 3 wears by a high friction created against the knead-material in the tip clearance TC. A cooling path (not shown) extending in the axial direction of the kneading rotors 4 and 5 is provided in a wall 3b of the casing 3. As the wear of the inner wall face 3a progresses, the cooling path might crack or break. As the tip clearance TC becomes excessively larger than a designed size as the wear of the inner wall face 3a progresses, a knead-substance may not be kneaded sufficiently, and the insufficiently kneaded substance may be discharged through the drop door 12.

To solve the problem described above, the kneading device 1 of the embodiment includes a sheathed thermocouple 14 (wear detecting sensor) for checking the progress of wear of the inner wall face 3a of the casing 3, and a controlling apparatus 15 (controller). The sheathed thermocouple 14 outputs a signal according to a detected temperature, and the signal output from the sheathed thermocouple 14 is input to the controlling apparatus 15 via a cable 21. As illustrated in FIG. 2B, the sheathed thermocouple 14 includes a protection tube 17 (sheath) including a distal end 17a, and a thermocouple wire 18 disposed in the protection tube 17. The thermocouple wire 18 is welded onto the inner face of the distal end 17a (detecting section) of the protection tube 17. The welded portion is a temperature measuring junction. This thermocouple is referred to as a grounded sheathed thermocouple.

Regarding the sheathed thermocouple 14, at least the distal end 17a is disposed in the wall 3b of the casing 3. To describe in detail, the distal end 17a of the sheathed thermocouple 14 is disposed at a bottom of a sensor-mount hole 16 (hereinafter simply referred to as a hole 16 or a sensor-mount space), which is a bottomed hole provided in the wall 3b. That is, the hole 16 is provided to have a predetermined depth so as not to penetrate the wall 3b from the outer side of the casing 3. The distal end 17a of the sheathed thermocouple 14 is disposed in the radially outer side of the kneading rotor 4 to be apart (isolated) from the inner wall face 3a of the casing 3 by a predetermined distance L. If the predetermined distance L is too wide, it may be difficult to detect the wear of the inner wall face 3a at a right timing. Thus, the distance L may be in a range from 0.5 mm to 5 mm inclusive, or from 0.5 mm to 3 mm inclusive. The predetermined distance L can suitably be set depending on the size of the kneading device, for example.

For example, a structure for attaching the sheathed thermocouple 14 to the casing 3 is described below.

The bottomed hole 16 extending along a radial direction of the kneading rotor 4 is drilled in the casing 3 from the outside toward the inside. The hole 16 has a bottom face 16x (bottom) provided in the radially outer side of the kneading rotor 4 or 5 to be apart from the inner wall face 3a by a predetermined distance. In an initial period of using the kneading device 1, the hole 16 is separated from the kneading chamber 2. A part of the casing 3 that forms the bottom face 16x of the hole 16 is defined as an internal face of the casing 3. The sheathed thermocouple 14 is inserted (housed) in the hole 16 and the distal end 17a is disposed to be apart from the inner wall face 3a of the kneading chamber 2 by a predetermined distance. In the embodiment as illustrated in FIG. 2B, the distal end 17a is brought into contact with the bottom face 16x (the internal face of the casing 3) of the hole 16. Thus, in the embodiment, the distance between the inner wall face 3a of the kneading chamber 2 and the bottom face 16x of the hole 16 is substantially the same as the predetermined distance L. With the distal end 17a of the sheathed thermocouple 14 kept in contact with the bottom face 16x of the hole 16, the sheathed thermocouple 14 is fixed to the casing 3 in a manner described below, for example. The protection tube 17 is held between a pair of plates 19 and 20. The pair of plates 19 and 20 is fixed to the outer circumferential face of the casing 3 by a bolt (not shown). The pair of plates 19 and 20 closes the opening of the hole 16. The protection tube 17 may have a thread on the outer circumferential face to allow a plate having a threaded hole to be screwed on the thread of the protection tube 17. The plate may be fixed to the protection tube 17 by a nut, for example, and the plate may be fixed to the outer circumferential face of the casing 3. The structure by which the sheathed thermocouple 14 is fixed to the casing 3 is not limited to the structure illustrated in FIGS. 2A and 2B.

An arc (semicircle) drawn by a dashed-two dotted line R illustrated in FIG. 2A shows an area where the distal end 17a of the sheathed thermocouple 14 is preferably disposed in the casing 3. In a cross-section of the casing 3 orthogonal to the axial direction of the kneading rotors 4 and 5, the kneading device 1 according to the embodiment has an cocoon shape so that the kneading chamber 2 houses the pair of kneading rotors 4 and 5. In the cross-section, the wear detecting sensor (the sheathed thermocouple 14 in the embodiment) is preferably disposed at a location on a pair of semicircular outer portions of the casing 3 (see the arc sections drawn by dashed-two dotted lines R) and oriented along the radial direction of the kneading rotors 4 and 5 as in the embodiment. To describe the wall 3b of the casing 3 as illustrated in FIGS. 2A and 2B in detail, the wear detecting sensor is disposed on the arc section R existing roughly in the outer side of a pair of lines (see dashed-dotted lines in FIG. 2A) that respectively join axes C of the pair of kneading rotors 4 and 5 and intersect a line connecting the axes C, and oriented along the radial direction of the kneading rotor 4 or 5. In the embodiment, the kneading blade tip 13a of the kneading rotor 4 and the kneading blade tip 13a of the kneading rotor 5 rotate about each axis C to move inwardly from the upper side to the lower side in a region between the kneading rotors 4 and 5. Thus, at least one wear detecting sensor is more preferably disposed in a portion of the arc section R below the line connecting a pair of the axes C.

The progress of wear of the inner wall face 3a of the kneading chamber 2 can quantitatively be checked by the sheathed thermocouple 14 serving as the wear detecting sensor.

As the knead-material pushed into the kneading chamber 2 is kneaded by the kneading rotors 4 and 5, the inner wall face 3a of the kneading chamber 2 wears by a high friction with the knead-material in the tip clearance TC (gap between the kneading blade tip 13a and the inner wall face 3a). If the inner wall face 3a wears in a radially outer side by the distance L from the initial inner wall face 3a, the hole 16a and the kneading chamber 2 communicate with each other, and the distal end 17a of the sheathed thermocouple 14 is exposed in the kneading chamber 2. As a result, the distal end 17a makes a hard contact against the knead-material in the tip clearance TC, and thereby the thermocouple wire 18 of the distal end 17a is broken (damaged). The breakage changes an output signal output from the sheathed thermocouple 14, and the changed output signal is input to the controlling apparatus 15. Based on the change in the signal caused by the breakage of the distal end 17a, a wear determining unit 22 of the controlling apparatus 15 determines that the inner wall face 3a of the kneading chamber 2 has worn by the distance L from the initial inner wall face 3a, and outputs a wear alarm signal. In such a manner, the sheathed thermocouple 14 outputs a signal corresponding to a state of wear, in the radial direction, of the inner wall face 3a. The controlling apparatus 15 receives the wear alarm signal, and an operator notices that the inner wall face 3a of the kneading chamber 2 has worn by the distance L from the initial inner wall face 3a by, for example, alarm-information presented on a display previously provided to the controlling apparatus 15 or by an alarm set off by an alarming unit previously provided to the controlling apparatus 15.

The kneading device 1 according to the embodiment enables checking the progress of wear of the inner wall face 3a of the kneading chamber 2 without stopping the kneading device 1. Since the distal end 17a, serving as the detecting section, of the sheathed thermocouple 14 serving as the wear detecting sensor is previously disposed in the hole 16 to be apart from the inner wall face 3a by the predetermined distance L, the progress of wear of the inner wall face 3a can quantitatively be checked.

Furthermore, since the distal end 17a of the sheathed thermocouple 14 serving as the wear detecting sensor is brought into contact with the bottom face 16x of the hole 16 drilled in the wall 3b of the casing 3, the progress of wear can correctly be checked.

As the wear of the inner wall face 3a of the kneading chamber 2 progresses, the distance between the inner wall face 3a and the bottom face 16x of the hole 16 becomes narrower. This increases the rate of rising temperature detected by the sheathed thermocouple 14 when the kneading rotors 4 and 5 stopped start operating. That is, the temperature sensor such as the sheathed thermocouple 14 is used as the wear detecting sensor and the distal end 17a serving as the detecting section of the wear detecting sensor is brought into contact with the bottom face 16x of the hole 16. This enables recognizing the progress of wear of the inner wall face 3a of the kneading chamber 2 by the magnitude of the rate of the rising temperature occurring after the kneading device starts operating.

Furthermore, such a thermocouple as a temperature sensor can simply be used as the wear detecting sensor. Among a variety of thermocouples, the grounded sheathed thermocouple 14 is used, as in the embodiment, to have an advantage of high responsiveness compared to a case where an ungrounded sheathed thermocouple is used.

As illustrated in FIG. 1, a member such as the material feeding sleeve 7 is disposed above the casing 3 provided with the kneading chamber 2 having a cocoon shape, and a member such as a base is disposed below the casing 3. In a cross-section of the casing 3 looking along the axial direction of the kneading rotors 4 and 5 with regard to the wall 3b of the casing 3, the wear detecting sensor (the sheathed thermocouple 14 in the embodiment) is disposed on the arc section R existing roughly in the outer side of the pair of lines that perpendicularly intersects, respectively at the axes C of the pair of kneading rotors 4 and 5, the line connecting the axes C, and oriented along the radial direction of the kneading rotor 4 or 5. Thus, interference between the member, such as the material feeding sleeve 7, and the wear detecting sensor is minimized. In this case, interference between the cooling paths (not shown) provided in the arc section R of the wall 3b to extend along the axial direction and the wear detecting sensor can also be minimized (a plurality of cooling paths exists in the same section).

The present invention is not limited to the embodiment described above. Modified embodiments can be employed as described below.

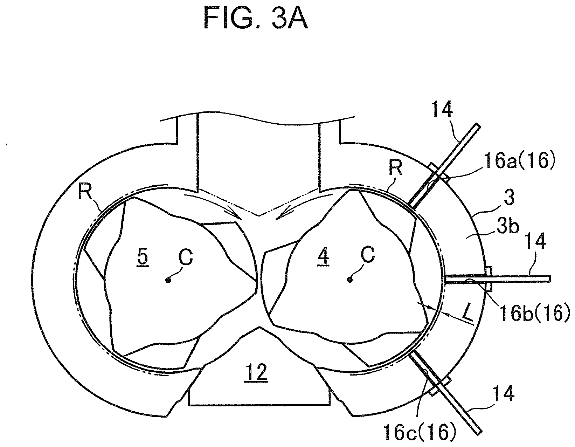

FIG. 3A is an enlarged cross-sectional view of a casing section of a kneading device according to a first modified embodiment of the present invention. A plurality of sheathed thermocouples 14 (wear detecting sensors) may be attached to the casing 3 so as to be disposed along the rotating direction of the kneading rotor 4 indicated by an arrow in FIG. 3A. In other words, the plurality of sheathed thermocouples 14 may be attached to the arc section R of the wall 3b of the casing 3. As illustrated in FIG. 3A, the plurality of sheathed thermocouples 14 may be disposed to oppose one of the pair of kneading rotors 4 and 5.

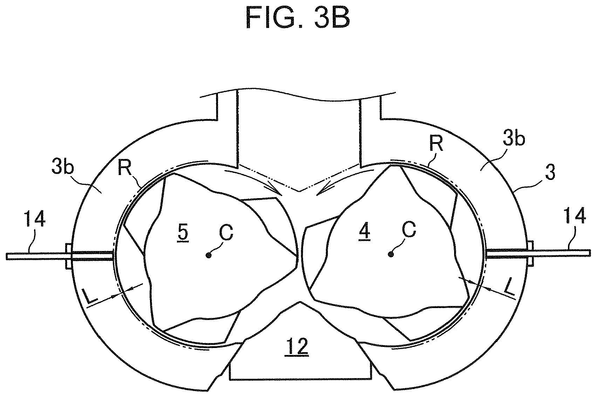

FIG. 3B illustrates an enlarged section of a casing section of a kneading device according to a second modified embodiment. As illustrated in FIG. 3B, the sheathed thermocouple 14 may be attached not only near the kneading rotor 4 but also near the kneading rotor 5. Furthermore, a plurality of sheathed thermocouples 14 (wear detecting sensors) may be attached to the casing 3 (wall 3b) along the axial direction of the kneading rotors 4 and 5 (not shown) depending on the trend of wear. Locations in the casing 3 where the plurality of sheathed thermocouples 14 are attached and the number of the sheathed thermocouples 14 are not limited to the aspects illustrated in FIGS. 2A, 3A, and 3B. For example, among the three sheathed thermocouples 14 illustrated in FIG. 3A, only the one nearest to an install-face of the kneading device 1 (lower side in FIG. 3A (side to the drop door 12 regarding the vertical direction)) may be provided. Furthermore, a plurality of holes 16 in which the sheathed thermocouples 14 are disposed may previously be provided in the wall 3b of the casing 3, and the sheathed thermocouple 14 (wear detecting sensor) may be disposed in a specific hole 16 selected among the plurality of holes 16 depending on, for example, the trend of the progress of wear of the inner wall face 3a of the kneading chamber 2. Among the plurality of holes 16, an operator may suitably select a hole 16 in which the sheathed thermocouple 14 (wear detecting sensor) is disposed. In FIG. 3A for example, the operator may dispose the sheathed thermocouples 14 only in two holes among three holes 16a to 16c, the two holes being the hole 16b approximately parallel to the install-face of the kneading device 1 and the hole 16c nearest to the install-face of the kneading device 1.

Other than the thermocouple, a contact-type temperature sensor, such as a resistance temperature device and a thermistor, may be used as a temperature sensor serving as the wear detecting sensor according to the present invention. The thermocouple is also a kind of the contact-type temperature sensor.

The wear detecting sensor is not limited to the temperature sensor. For example, a pressure sensor may be used. Regarding the pressure sensor, at least the distal end serving as the detecting section is disposed in the wall 3b of the casing 3. To describe in detail, the distal end of the pressure sensor serving as the wear detecting sensor is disposed at the bottom of the hole 16 (sensor-mount hole), which is a bottomed hole provided in the wall 3b. The bottom face 16x of the hole 16 is provided to be apart from the inner wall face 3a of the kneading chamber 2 by a predetermined distance L. As in the embodiment described above, the predetermined distance L may be in a range from 0.5 mm to 5 mm inclusive, or from 0.5 mm to 3 mm inclusive.

The progress of wear of the inner wall face 3a of the kneading chamber 2 can quantitatively be checked by the pressure sensor serving as the wear detecting sensor. If the inner wall face 3a wears by the distance L from the initial inner wall face 3a, the bottom of the hole 16 and the kneading chamber 2 communicate with each other. Then, the knead-material intrudes into the hole 16 and the distal end, serving as the detecting section, of the pressure sensor is pressurized. The pressure changing between before and after the pressurization causes a change in a signal output from the pressure sensor, and the change is input to the controlling apparatus 15. Based on the change in the signal caused by the hole 16 and the kneading chamber 2 communicating with each other due to the wear of the inner wall face 3a in a radial direction, the wear determining unit 22 of the controlling apparatus 15 determines that the inner wall face 3a of the kneading chamber 2 has worn by the distance L from the initial inner wall face 3a.

Using the pressure sensor as described above, the progress of wear of the inner wall face 3a of the kneading chamber 2 can be checked without stopping the kneading device 1. Furthermore, the distal end of the pressure sensor is previously disposed at the bottom of the hole 16 to be close to the bottom face 16x, and the bottom face 16x of the hole 16 is disposed to be apart from the inner wall face 3a of the kneading chamber 2 by the predetermined distance L. Therefore, the progress of wear of the inner wall face 3a can quantitatively be checked by the change in the pressure detected by the pressure sensor.

The kneading device 1 according to the embodiment is a double-axis kneading device including the pair of kneading rotors 4 and 5. However, the kneading device according to the embodiment of the present invention may be a single-axis kneading device including a single kneading rotor. That is, at least one kneading rotor may be disposed in the kneading device.

Furthermore, the kneading rotors 4 and 5 according to the embodiment are each a rotor provided with the three kneading blades 13 disposed along the rotating direction. However, the kneading rotor may be provided with two kneading blades disposed along the rotating direction or a single kneading blade.

The embodiment and the modified embodiments of the present invention have been described above. The present invention is not limited to the embodiment and the modified embodiments, which are examples of the kneading device of a sealed type. It should be noted that various modifications can be made within a scope in which a person skilled in the art can arrive at.

The present invention provides a kneading device including at least one kneading rotor that is rotated about a predetermined axis to knead a knead-material and includes a kneading blade that applies a shear force to the knead-material, the kneading blade including a kneading blade tip provided at an outermost regarding a radial direction of the at least one kneading rotor, a casing including an inner wall face opposing the kneading blade tip with a predetermined gap between the inner wall face and the kneading blade tip and forming a kneading chamber housing the at least one kneading rotor to knead the knead-material, the casing being formed of a sensor-mount space separated from the inner wall face, the sensor-mount space including a bottom apart from the inner wall face by a predetermined distance in the radial direction, a wear detecting sensor including a detecting section and housed in the sensor-mount space so that the detecting section is disposed at the bottom of the sensor-mount space, the wear detecting sensor being configured to output a signal according to a state of wear of the inner wall face in the radial direction, and a controller that receives the signal output from the wear detecting sensor and includes a wear determining unit that determines the progress of the wear of the inner wall face based on a change in the signal.

In the configuration described above, the casing preferably has an internal face that forms the bottom of the sensor-mount space and the detecting section of the wear detecting sensor is in contact with the internal face of the casing.

In the configuration described above, the wear detecting sensor preferably include a contact-type temperature sensor. The contact-type temperature sensor preferably includes a thermocouple. In this case, the thermocouple preferably includes a grounded sheathed thermocouple. Furthermore, the wear determining unit preferably determine that wear of the inner wall face has progressed based on a change in the signal caused by breakage of the detecting section of the contact-type temperature sensor. The detecting section of the contact-type temperature sensor preferably be disposed to be apart from the inner wall face by a predetermined distance. The predetermined distance preferably be in a range from 0.5 mm to 5 mm inclusive.

In the configuration described above, the wear detecting sensor may include a pressure sensor. In this case, the wear determining unit preferably determine that wear of the inner wall face has progressed based on a change in the signal caused by the sensor-mount space and the kneading chamber communicating with each other due to wear of the inner wall face in the radial direction. The bottom of the sensor-mount space preferably be disposed to be apart from the inner wall face by a predetermined distance. The predetermined distance preferably be in a range from 0.5 mm to 5 mm inclusive.

In the configuration, the at least one kneading rotor preferably include a pair of kneading rotors, in a cross-section of the casing, the cross-section being orthogonal to an axial direction of the kneading rotor, the kneading chamber preferably have an cocoon shape housing the pair of kneading rotors, a wall of the casing preferably include an arc section provided in an outer side of a pair of lines in the cross-section, the pair of lines intersecting, respectively at the axes, a line connecting the axes of the pair of kneading rotors, and the wear detecting sensor is disposed on the arc section and oriented along the radial direction of the kneading rotor.

In this case, the pair of kneading rotors each rotates about each axis in such a direction that the kneading blade tip of the kneading rotor moves inwardly from an upper side to a lower side in a region between the kneading rotors, and the wear detecting sensor preferably be disposed in a portion of the arc section below the line connecting the axes.

## Claims

1. A kneading device comprising:
at least one kneading rotor that is rotated about a predetermined axis to knead a knead-material and includes a kneading blade that applies a shear force to the knead-material, the kneading blade including a kneading blade tip provided at an outermost in a radial direction of the kneading rotor;
a casing including an inner wall face opposing the kneading blade tip with a predetermined gap between the inner wall face and the kneading blade tip and forming a kneading chamber housing the at least one kneading rotor to knead the knead-material, the casing being formed of a sensor-mount space separated from the inner wall face, the sensor-mount space including a bottom apart from the inner wall face by a predetermined distance in the radial direction;
an wear detecting sensor including a detecting section and housed in the sensor-mount space so that the detecting section is disposed at the bottom of the sensor-mount space, the wear detecting sensor being configured to output a signal according to a state of wear of the inner wall face in the radial direction; and
a controller that receives the signal output from the wear detecting sensor and includes a wear determining unit that determines the progress of the wear of the inner wall face based on a change in the signal.

2. The kneading device according to claim 1, wherein
the casing has an internal face that forms the bottom of the sensor-mount space, and
the detecting section of the wear detecting sensor is in contact with the internal face of the casing.

3. The kneading device according to claim 1 or 2, wherein
the wear detecting sensor includes a contact-type temperature sensor.

4. The kneading device according to claim 3, wherein
the contact-type temperature sensor includes a thermocouple.

5. The kneading device according to claim 4, wherein
the thermocouple includes a grounded sheathed thermocouple.

6. The kneading device according to claim 3, wherein
the wear determining unit determines the progress of the wear of the inner wall face based on a change in the signal caused by breakage of the detecting section of the contact-type temperature sensor.

7. The kneading device according to claim 6, wherein
the detecting section of the contact-type temperature sensor is disposed to be apart from the inner wall face by a predetermined distance.

8. The kneading device according to claim 7, wherein
the predetermined distance is in a range from 0.5 mm to 5 mm inclusive.

9. The kneading device according to claim 1 or 2, wherein
the wear detecting sensor includes a pressure sensor.

10. The kneading device according to claim 9, wherein
the wear determining unit determines the progress of the wear of the inner wall face based on a change in the signal caused by the sensor-mount space and the kneading chamber communicating with each other due to wear of the inner wall face in the radial direction.

11. The kneading device according to claim 10, wherein
the bottom of the sensor-mount space is disposed to be apart from the inner wall face by a predetermined distance.

12. The kneading device according to claim 11, wherein
the predetermined distance is in a range from 0.5 mm to 5 mm inclusive.

13. The kneading device according to claim 1 or 2, wherein
the at least one kneading rotor includes a pair of kneading rotors,
in a cross-section of the casing, the cross-section being orthogonal to an axial direction of the kneading rotor,
the kneading chamber has a cocoon shape housing the pair of kneading rotors,
a wall of the casing includes an arc section provided in an outer side of a pair of lines in the cross-section, the pair of lines intersecting, respectively at the axes, a line connecting the axes of the pair of kneading rotors, and the wear detecting sensor is disposed on the arc section and oriented along the radial direction of the kneading rotor.

14. The kneading device according to claim 13, wherein
the pair of kneading rotors each rotates about the axis in such a direction that the kneading blade tip moves inwardly from an upper side to a lower side in a region between the kneading rotors, and
the wear detecting sensor is disposed in a portion of the arc section below the line connecting the axes.
